# EUROPEAN PATENT SPECIFICATION

(11) **EP 0 278 032 B1**
(45) Date of publication and mention of the grant of the patent: **11.01.1995**
(21) Application number: 87101882.6
(22) Date of filing: 11.02.1987
(51) Int. Cl.: F02B 27/06

(54) **High performance exhaust system for internal combustion engine**
Hochleistungsauspuffanlage für Brennkraftmaschine
Système d'échappement à haute performance pour moteur à combustion interne

(43) Date of publication of application: 17.08.1988
(73) Proprietor: YAMAHA MOTOR CO., LTD., Iwata-shi Shizuoka-ken, 438 (JP)
(72) Inventor: Ueda, Hideaki, Shizuoka-ken (JP)
(74) Representative: Grünecker, Kinkeldey, Stockmair & Schwanhäusser Anwaltssozietät

(56) References cited:
- EP-A- 0 260 582
- FR-A- 1 132 431
- US-A- 2 717 583
- US-A- 2 862 490
- PATENT ABSTRACTS OF JAPAN, vol. 11, no. 175 (M-596)[2622], 5th June 1987;& JP-A-62 7924 (HONDA MOTOR CO. LTD) 14-01-1987
- PATENT ABSTRACTS OF JAPAN, vol. 6, no. 267 (M-182)[1145], 25th December 1982;& JP-A-57 159 919 (HINO JIDOSHA KOGYO K.K.) 02-10-1982

## Description

This invention relates to a high performance exhaust system for a multi-cylinder internal combustion engine and more particularly to an exhaust system that permits a higher specific output and also which improves the output of the engine at mid-range running conditions.

It is well known that the power output of an internal combustion engine, at any particular running condition, is determined by the amount of fuel/air charge that can be successfully inducted into the combustion chamber and completely burned during each cycle of the engine operation. Thus, the efficiency of the engine is directly related to its charging efficiency. A wide variety of devices have been employed for improving the charging efficiency of an internal combustion engine. Such devices include multiple intake and exhaust valves, turbo-charging, and/or the use of considerable overlap between the opening of the intake valve and the closing of the exhaust valve. High performance engines normally include either valve or port timing (depending on whether they are four or two-cycle type) that have considerable overlap to achieve high power output.

Although such overlapping valve or port timing is very effective to improve the high performance output of an internal combustion engine, such an arrangement for increasing the power output significantly reduces the performance at mid-range conditions, particularly when several cylinders of the engine discharge into a common exhaust device such as an expansion chamber. The reason for this is that there will exist at the exhaust port of the engine a high pressure during a stage of the engine operation when the intake valve is also opened. This high pressure may be caused from the transmission back to the exhaust port of a pressure pulse in the exhaust system. Such pressure pulses may be transmitted from other exhaust ports back through the expansion chamber. Therefore, rather than drawing a fresh fuel/air charge into the combustion chamber through the intake port, the exhaust gases tend to flow back into the combustion chamber through the exhaust port. This not only dilutes the fresh fuel/air charge in the combustion chamber but it also precludes the introduction of a complete fuel/air charge. As a result, many high performance, multiple cylinder engines employing large degrees of valve overlap have extremely poor mid-range or low speed running characteristics. This manifests itself in the torque curve of the engine wherein, although maximum power output is achieved, the torque output of the engine at mid-range and low speeds is considerably poorer than a more convention engine having less valve overlap or port timing overlap.

In US-A-2 862 490 there is shown an arrangement in which an internal combustion engine has a plurality of combustion chambers, an exhaust port for each of said combustion chambers for discharging exhaust gases from said combustion chambers, a plurality of exhaust pipes each extending from a respective one of said exhaust ports for conveying exhaust gases therefrom, and an expansion chamber into which said exhaust pipes discharge. From JP-A-62-7924 there is known an exhaust control device for internal combustion members, said control device comprising a member capable of changing the aperture area of an exhaust pipe's open end wherein the aperture area is made adjustable in accordance with preset engine operating conditions. In particular a shielding member which is operated by an actuator provided on an end portion where an exhaust pipe of an engine opens into a mufffler. The actuator works to let open the shielding member in case of high speed rotations and to close a part of the open end portion of the exhaust pipe in case of low speed rotations. Thereby the most suitable reflected wave can be obtained by variation of a substantial length of the exhaust pipe.

EP-A-0 260 582, which is a document according to Article 54 (3) EPC, discloses an exhaust control device for a motor cycle, having at least three exhaust pipes, which are connected to an expansion chamber. Control valves are provided in this control device, to change the area of exhaust flow path of each exhaust pipe. It is disclosed that the area of exhaust flow path can be throttled by about 70% in the low-speed range.

### SUMMARY OF THE INVENTION

It is therefore, a principal object of this invention to provide an arrangement for a multi-cylinder internal combustion engine that will permit the achievement of high power outputs but which will not adversely affect idle and mid-range running.

It is a further object of this invention to provide an arrangement for a multi-cylinder internal combustion engine wherein the power output of the engine may be improved at all running conditions.

It is a still further object of this invention to provide an exhaust system for a multi-cylinder internal combustion engine that permits the use of large valve or port timing overlap without adversely affecting the performance of the engine at low and mid-ranges.

This object is solved according to the invention by the subject matter of claim 1.

### BRIEF DESCRIPTION OF THE DRAWINGS

Figure 1 is a side elevational view of a motorcycle, shown partially in phantom, having an internal combustion engine constructed in accordance with an embodiment of the invention.

Figure 2 is an enlarged top plan view showing the exhaust system for the engine.

Figure 3 is an enlarged cross-section view taken along the line 3-3 of Figure 2.

Figure 4 is a family of curves showing the pressure at the exhaust port in connection with different constructions.

Figure 5 is a graphical view showing how the reflective control valves may be operated.

### DETAILED DESCRIPTION OF THE PREFERRED EMBODIMENTS

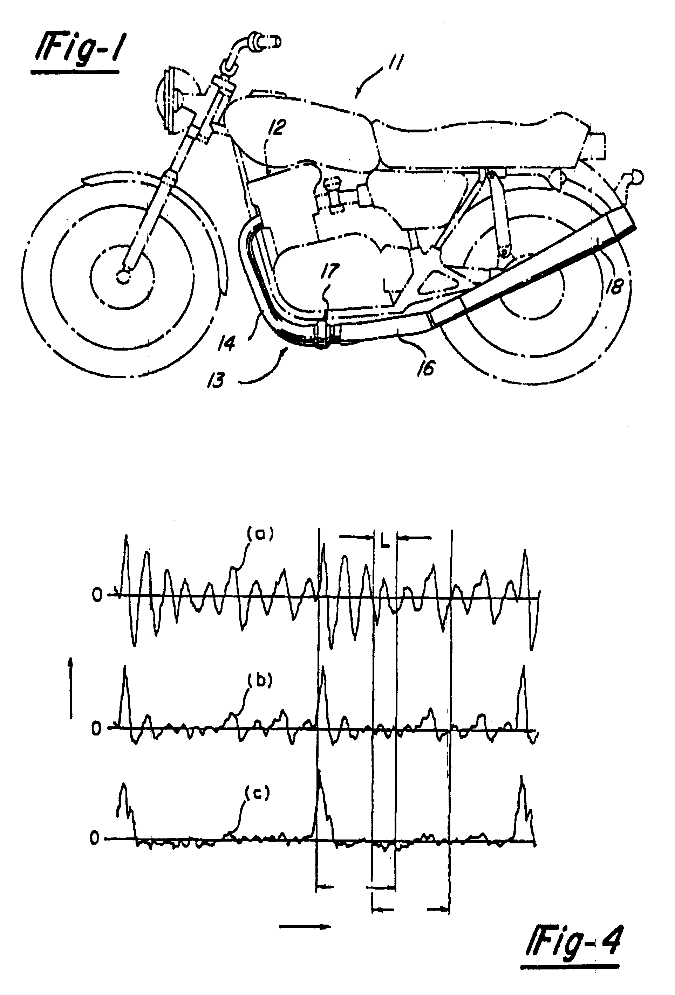

Referring now in detail to the drawings and particularly to Figures 1 and 2, a motorcycle powered by an internal combustion engine constructed in accordance with an embodiment of the invention is shown partially in phantom and is identified generally by the reference numeral 11. The motorcycle 11 includes a powering internal combustion engine 12 which, in the illustrated embodiment, is depicted as being of the four cylinder inline type. The engine 12, in the illustrated embodiment, is of the four-cycle type, however it is to be understood that the invention may be practiced with engines operating on the two-stroke cycle, and on engines having differing numbers of cylinders and different cylinder arrangements. Also, the invention is susceptible of use in other than reciprocating engines. However, the invention has utility in multi-cylinder engines of the type wherein there is a substantial overlap between the closing of the exhaust valve and the opening of the intake valve or, in the case of a two-cycle engine, the closing of the exhaust port and the opening of the intake port.

Since the invention deals with the exhaust system for the engine, the details of the engine have not been illustrated. It is to be understood, however, that the engine has an intake port and an exhaust port which are controlled either by valves, piston movement or the like, depending upon whether the engine is of the two or four-cycle type and that there is a substantial overlap between the opening of the intake valve and the closing of the exhaust valve as will be described.

The engine 12 is provided with an exhaust system, indicated generally by the reference numeral 13, and which is constructed in accordance with an embodiment of the invention. The exhaust system 13 includes a plurality of individual exhaust pipes 14 that are flanged as at 15 at their inlet ends for cooperation with the cylinder head of the engine 12 so as to place the exhaust pipe 14 in communication at their inlet ends with the exhaust ports of the engine 12. At their outlet ends, the exhaust pipes 14 discharge into an expansion chamber 16 through a valve assembly, indicated generally by the reference numeral 17 and constructed in accordance with an embodiment of the invention. The exhaust gases are delivered from the expansion chamber 16 to the atmosphere through a pair of combined muffler and tailpipes 18 which lie on opposite sides of the rear wheel of the motorcycle.

Except for the valve mechanism 17 and the way it is operated, which will be described, the engine 12 and its exhaust system 13 may be considered to be conventional. The engine 12 is designed to be of the high output type and has a substantial overlap in its valve timing. As a result, the engine 12, with its exhaust system 13 and without considering the operation of the valve mechanism 17, will produce a torque curve at high speeds that is extremely good and provides a high power. However, at the intermediate ranges, the torque curve falls off rather badly and these are the normal cruising speeds of the engine. Also, at the idle condition and low speed, the torque is also not good and poor running results.

This poor low and mid-range torque curve is a result of the fact that pressure pulses occur at the exhaust ports during the overlap period which pressure pulses tend to cause exhaust gases to flow back into the combustion chamber. As a result, the combustion chamber is not filled with a fresh fuel/air charge and these poor performance characteristics result. At high engine speeds, the positive pressure pulses do not occur at the exhaust port during the overlap and hence this phenomenon occurs at other than high speed conditions. The reason for this may be seen by looking at the top curve of Figure 4 wherein the pressure at the exhaust port of an engine operating at a low speed condition is identified by the curve a. During the period of valve overlap L, there is a positive pressure at the exhaust ports of the cylinders, which positive pressure occur at least in part due to the transmission of pressure pulses from other exhaust ports back to any one exhaust port through the expansion chamber 16. Hence, this positive pressure causes the deleterious effect as aforenoted.

In accordance with the invention, the valve mechanism 17 is employed for preventing the existance of such positive pressures at the exhaust port during the overlap period and under predetermined running conditions.

Referring now specifically to Figures 2 and 3, the valve assembly 17 includes a valve body 19 that has a plurality of passages 21 that cooperate with the exhaust pipe outlets 14 to deliver exhaust gases into the expansion chamber 16. In each of the passages 21, there is provided a control valve 22 for controlling the pressure at the exhaust ports of the engine.

The control valves 22 are all affixed to a common control valve shaft 23 that is journaled in a suitable manner in the valve body 19. At one end of the shaft 23, there is provided a control pulley 24 around which is wound a flexible transmitter 25. The transmitter 25 is, in turn, operated by means of a control motor 26 that may be of any known type motor such as a vacuum motor, electric motor, electric solenoid or the like. The control motor 26 is, in turn, operated by means of a logic device 27 that controls the position of the valves 22 in response to preset conditions. These preset conditions may be either engine speed, carburetor throttle valve position, boost pressure (in the event the engine is super-charged), engine load, or any other type of arrangement for providing the necessary control signal in response to the running condition.

In accordance with the invention, the cross-sectonal area of the reflective control valve 22 is such that when they are fully closed, as shown in Figure 3, that they will obstruct an area of 90% of the effective cross-sectional area of the exhaust pipes 14. Figure 4 shows two additional curves, one (curve b) in which the valve 22 closes approximately 50% of the effective cross-sectional area which is below the value, proposed by the present invention while the other, curve c, shows an arrangement according to the present invention wherein the valve 22 closes 90% of the effective area. These areas are generated at idle conditions which is approximately equal to 1,200 rpm in an embodiment of the invention. As can be seen, the greater the effective closing, the less the pressure peak which occur during the overlap period L.

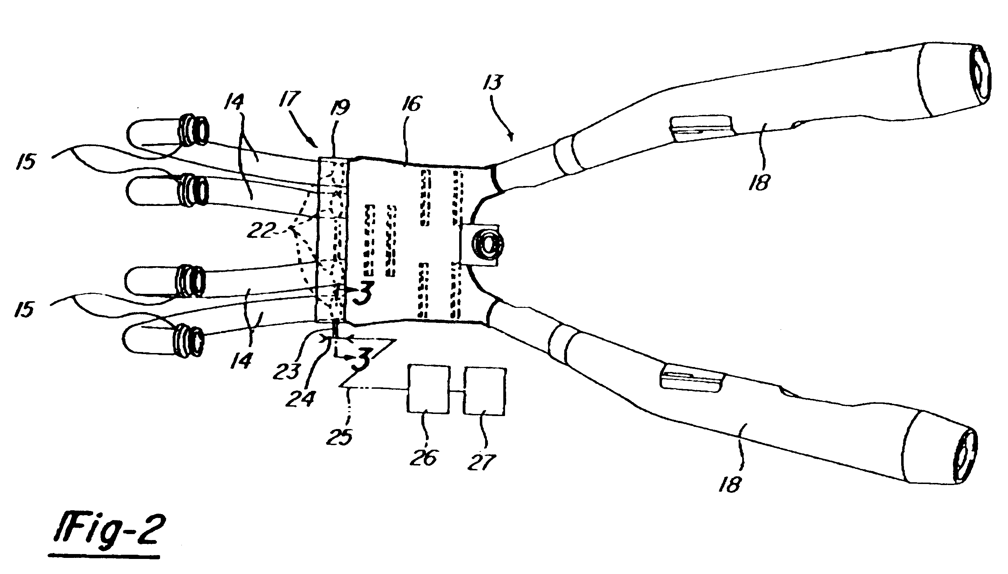

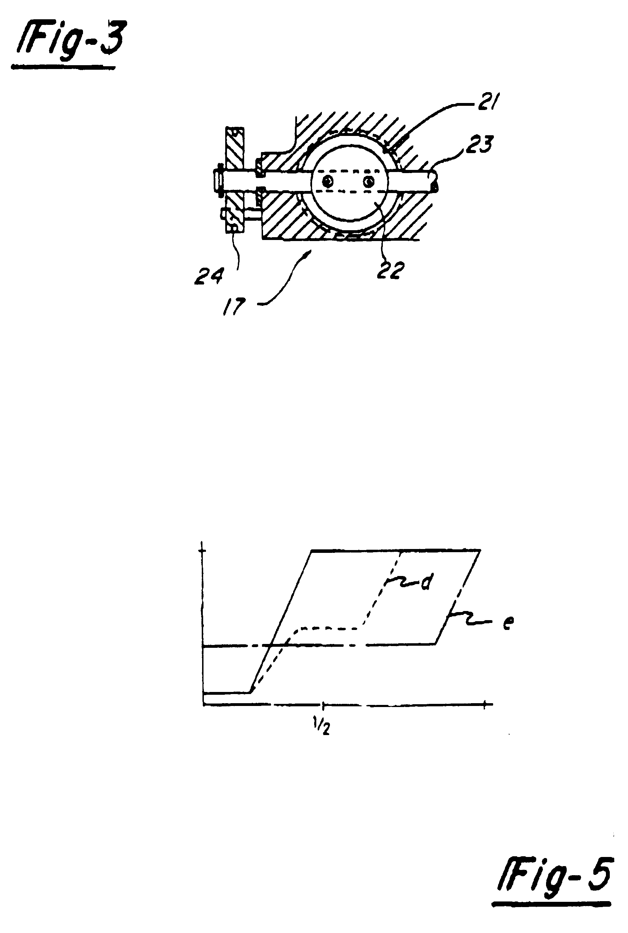

Figure 5 is a view that shows how the valves 22 are closed in response to an engine running condition. In the illustrated embodiment, the arrangement is such that the control valves 22 are closed in response to the speed of the engine. Of course, as has been previously noted, other types of controls can he employed. In the solid line view shown in this figure, the valves 22 are held closed from an idle position up to a low speed condition and then are opened progressively until they reach fully opened position at approximately half engine speed. However, it is to be understood that differing opening arrangements may be employed as shown by the dotted line curve d or the dot-ash curve e. Those skilled in the art can readily determine which type of arrangement best suits a given engine performance bearing in mind the number of cylinders, firing order, and so forth. However, in each instance, the arrangement is such that the torque of the engine can be significantly improved at low speed running.

It should be readily apparent from the foregoing description that an improved exhaust system has been provided for an internal combustion engine wherein the engine power output may he improved throughout the entire load and speed ranges without making any sacrifices or compromises.

## Claims

1. An internal combustion engine comprising a plurality of combustion chambers, and an exhaust port for each of said combustion chambers for discharging exhaust gases from said combustion chambers,
a plurality of exhaust pipes each extending from a respective one of said exhaust ports for conveying exhaust gases therefrom, and an expansion chamber into which said exhaust pipes discharge,
a valve mechanism (17) provided for preventing the transmission of pressure pulses from other exhaust ports back to any one exhaust port through said expansion chamber (16),
said valve mechanism including a valve body (19) having a plurality of passages (21), cooperating with exhaust pipe outlets (14) to deliver exhaust gases into said expansion chamber (16),
a control valve (22 provided in each of said passages (21), the cross-sectional area of said control valves (22) being such that when they are fully closed, they will obstruct an area of the effective cross-sectional area of said passages;
said control valves being adjustable in response to the engine speed, and close 90% of the effective area at idle engine speed condition.

## Patentansprüche

1. Brennkraftmaschine mit einer Mehrzahl von Brennkammern und einer Auslaßöffnung für jede der Brennkammern zur Abführung der Auspuffgase aus den Brennkammern,
einer Mehrzahl von Auspuffrohren, von denen sich jedes zur Abführung der Auspuffgase jeweils von einer der Auslaßöffnungen erstreckt, und einer Expansionskammer, in die die Auspuffrohre ausstoßen,
einem Ventilmechanismus (17), der vorgesehen ist, die Übertragung von Druckstößen von anderen Auslaßöffnungen durch die Expansionskammer (16) zurück zu einer Auslaßöffnung zu verhindern,
wobei der Ventilmechanismus einen Ventilkörper (19) umfaßt, der eine Mehrzahl von Kanälen (21) aufweist, die mit Auspuffrohr-Auslässen in Verbindung stehen, um Auspuffgase in die Expansionskammer (16) zu führen,
einem Regelventil (22), das in jedem der Kanäle (21) vorgesehen ist, wobei die Querschnittsfläche der Regelventile derart ist, daß sie, wenn sie völlig geschlossen sind, einen Abschnitt der effektiven Querschnittsfläche der Kanäle versperren,
wobei die Regelventile einstellbar sind in Abhängigkeit von der Motordrehzahl, und 90 % der effektiven Fläche im Leerlaufbetrieb des Motors verschließen.

## Revendications

1. Moteur à combustion interne comprenant une pluralité de chambres de combustion et un orifice de sortie affecté à chacune desdites chambres de combustion, afin d'évacuer des gaz d'échappement desdites chambres de combustion,
une pluralité de tubulures d'échappement dont chacune part de l'un respectif desdits orifices de sortie, afin d'en évacuer des gaz d'échappement, et une chambre d'expansion dans laquelle lesdites tubulures d'échappement débouchent,
un mécanisme (17) à valves, prévu pour empêcher le reflux d'impulsions de pression vers l'un quelconque des orifices de sortie, à partir d'autres orifices de sortie, à travers ladite chambre d'expansion (16),
ledit mécanisme à valves présentant un corps d'obturation (19) muni d'une pluralité de canaux (21) coopérant avec des sorties des tubulures d'échappement (14), afin d'introduire des gaz d'échappement dans ladite chambre d'expansion (16),
une valve de commande (22) prévue dans chacun desdits canaux (21), la section desdites valves de commande (22) étant telle que, lorsqu'elles sont intégralement fermées, elles obturent une zone de la section efficace desdits canaux ;
lesdites valves de commande étant réglables en réponse à la vitesse du moteur, et obturant 90 % de la section efficace en régime de vitesse de ralenti du moteur.
